# EUROPÄISCHE PATENTANMELDUNG

(11) **EP 4 775 865 A1**
(43) Veröffentlichungstag der Anmeldung: **15.07.2026**
(21) Anmeldenummer: 25151054.1
(22) Anmeldetag: 09.01.2025
(51) Int. Cl.: F16L 37/56, E03C 1/04

(54) **BEFESTIGUNGSVORRICHTUNG ZUR BEFESTIGUNG VON SCHLÄUCHEN AN EINER KARTUSCHE EINER SANITÄRARMATUR**

(71) Anmelder: Neoperl GmbH, 79379 Müllheim (DE)
(72) Erfinder: Kury, Werner, 79379 Müllheim (DE); Tempel, Marc, 79111 Freiburg (DE); Mündlein, Jochen, 79291 Merdingen (DE)
(74) Vertreter: Mertzlufft-Paufler, Cornelius

(57) **Zusammenfassung**

Befestigungsvorrichtung zur Befestigung von Schläuchen (6) an einer Kartusche (1) einer Sanitärarmatur, wobei ein Grundkörper (2) zwei Zulauföffnungen (3) und eine Ablauföffnung (4) jeweils zum Einführen eines Schlauchverbinders (5) aufweist, dadurch gekennzeichnet, dass ein Sicherungsstift (10) von außen in den Grundkörper (2) einsetzbar ist, wobei der Sicherungsstift (10) in die Ablauföffnung (4) und in die beiden Zulauföffnungen (3) eingreift, um dort eine Sicherung eingesetzter Schläuche (6) zu ermöglichen und dass die Befestigungsvorrichtung eine Auszugssicherung umfasst, die den Sicherungsstift (10) in dem Grundkörper (2) hält. (Fig. 4)

## Beschreibung

Die Erfindung betrifft eine Befestigungsvorrichtung zur Befestigung von Schläuchen an einer Kartusche einer Sanitärarmatur, wobei ein Grundkörper zwei Zulauföffnungen und einer Ablauföffnung jeweils zum Einführen eines Schlauchverbinders aufweist.

Bei solchen Ventilkartuschen werden in der Regel die Schläuche eingesetzt, bevor die Kartusche in eine Sanitärmatur eingebaut wird. Während dem Einbau kann ein Schlauch versehentlich wieder gelöst oder ganz aus seiner Einsetzöffnung herausfallen. Es besteht daher die Notwendigkeit die Schläuche an der Kartusche zu sichern.

Hierzu sind verschiedene Befestigungsvorrichtungen bekannt. Die Erfindung hat sich jedoch die Aufgabe gemacht eine Befestigungsvorrichtung zu verbessern.

Die Aufgabe wird durch eine Befestigungsvorrichtung mit den Merkmalen des Anspruch 1 gelöst.

Erfindungsgemäß ist die Befestigungsvorrichtung dadurch gekennzeichnet, dass ein Sicherungsstift von außen in den Grundkörper einsetzbar ist, wobei der Sicherungsstift in die Ablauföffnung und in die beiden Zulauföffnungen eingreift, um dort eine Sicherung eingesetzter Schläuche zu ermöglichen und dass die Befestigungsvorrichtung eine Auszugssicherung umfasst, die den Sicherungsstift in dem Grundkörper hält. Auf diese Weise ist eine Sicherung und Befestigung der Schläuche bereits außerhalb eines Armaturkörpers möglich. Beim Einsetzen der Kartusche mit befestigten Schläuchen besteht somit keine Gefahr, dass sich ein Schlauch löst. Zudem ist die Befestigungsvorrichtung einfach und kostengünstig realisierbar, da nur ein einzelner Sicherungsstift notwendig ist, um alle Schläuche zu sichern.

Darüber hinaus verhindert die Auszugsicherung, dass sich der eingesetzte Sicherungsstift nach der Montage der Schläuche löst.

Der Grundkörper kann beispielsweise ein Grundkörper einer Ventilkartusche sein, die beispielsweise in eine Armatur eingesetzt wird. Alternativ kann eine Ventilkartusche über einen Kartuschenadapter angeschlossen sein, wobei die Schlauchverbinder in diesem Kartuschenadapter angeordnet sind. In einem solchen Fall kann der Grundkörper ein Grundkörper des Kartuschenadapters sein.

In einer Ausführung weist der Grundkörper eine Sicherungsöffnung auf, in die der Sicherungsstift von außen einsetzbar ist. Dies hat den Vorteil, dass der Sicherungsstift einfach nach dem Einsetzten der Schläuche in die Sicherungsöffnung eingeführt werden kann.

In einer Ausführung ist der Sicherungsstift von außen radial und/oder geradlinig in die Sicherungsöffnung einsetzbar. Auf diese Weise ist ein schnelle und einfache Befestigung der Schläuche ermöglicht.

In einer Ausführung ist die Sicherungsöffnung im Wesentlichen gerade oder kreisbogenförmig ausgebildet. Im Wesentlichen ist die Sicherungsöffnung an die Form des Sicherungsstiftes angepasst, so dass dieser in der Sicherungsöffnung im Wesentlichen spielfrei geführt ist.

In einer Ausführung kann die Sicherungsöffnung den Sicherungsstift in wenigstens zwei Orientierungen in Bezug auf dessen Längsachse aufnehmen. Der Vorteil ist dabei, dass bei der Montage nicht auf eine Orientierung des Sicherungsstiftes geachtet werden muss, wodurch die Montage vereinfacht sein kann. Somit kann beispielsweise eine Steckrichtung verschieden gewählt werden. Beispielsweise könnte gewählt werden ob der Sicherungsstift etwa von links oder rechts aus eingeführt wird.

In einer Ausführung besitzt der Sicherungsstift einen unrunden, insbesondere viereckigen, Querschnitt, zumindest abschnittweise oder wenigstens in einem Abschnitt. Auf diese Weise wird verhindert, dass sich der eingesetzte Sicherungsstift innerhalb des Grundkörpers um seine Längsachse dreht, wodurch etwa eine Auszugssicherung gelöst werden könnte. Somit ist ein sicherer Halt in dem Grundkörper ermöglicht.

Die Auszugsicherung umfasst einen Formschluss und/oder Kraftschluss zwischen dem Grundkörper und dem Sicherungsstift.

In einer Ausführung kann beispielsweise der Querschnitt des Sicherungsstiftes entlang seiner Längserstreckung variieren.

In einer Ausführung ist die Sicherungsöffnung in einer radialen Richtung zwischen den Zulauföffnungen und der Ablauföffnung angeordnet. Eine günstige Anordnung der Zu- und Ablauföffnungen ist in Form eines Dreiecks. Dabei liegen die beiden Zulauföffnungen auf einer Gerade und die Ablauföffnung liegt mittig zwischen den beiden Zulauföffnungen aber von dieser Gerade beabstandet. Die Sicherungsöffnung liegt somit bevorzugt zwischen der Gerade und der Ablauföffnung. Dadurch kann der Sicherungsstift auf einfache Weise in alle Schlauchverbinder der Schläuche eingreifen und diese sichern.

In einer Ausführung definiert die Sicherungsöffnung jeweils eine tangentiale Öffnung in den Zulauföffnungen und der Ablauföffnung. Durch diese tangentialen Öffnungen kann der Sicherungsstift in die Schlauchverbinder der Schläuche eingreifen.

In einer Ausführung ist die Sicherungsöffnung durchgehend oder beidseitig offen ausgebildet, insbesondere so dass der Sicherungsstift beidseitig einsetzbar ist. Auf diese Weise kann der Sicherungsstift von beiden Seiten in die Sicherungsöffnung eingesetzt werden, wodurch die Montage vereinfacht sein kann.

In einer Ausführung besitzt der Sicherungsstift ein Sicherungselement das zum Einsetzen in die Sicherungsöffnung ausgebildet ist. Das Sicherungselement ist damit für die Sicherung der Schlauchverbinder oder der Schläuche innerhalb der Sicherungsöffnung zuständig. Das Halteelement kann von dem Sicherungselement unabhängig geformt sein. Das Halteelement verhindert ein selbsttätiges Herausrutschen oder Herausfallen des Sicherungsstiftes aus der Sicherungsöffnung.

In einer Ausführung ist das Sicherungselement im Wesentlichen gerade oder kreisbogenförmig ausgebildet. Insbesondere weist das Sicherungselement die Form der Sicherungsöffnung auf.

Diese gerade oder kreisbogenförmige Form des Sicherungselements ermöglicht ein schnelles und einfaches einsetzten in die Sicherungsöffnung.

In einer Ausführung weist der Sicherungsstift ein Halteelement auf. Das Halteelement kann beispielsweise mit dem Sicherungselement verbunden sein. Das Halteelement kann beispielsweise Teil der Auszugsicherung sein.

In einer Ausführung besitzt das Halteelement als Auszugssicherung einen gegenüber der Sicherungsöffnung vergrößerten Querschnitt. Das Halteelement kann beispielsweise ein Abschnitt des Sicherungselements sein, das gegenüber dem Sicherungselement einen vergrößerten Querschnitt aufweist.

Auf diese Weise kann der Sicherungsstift wie eine Art Keil durch Kraftschluss in dem Grundkörper gehalten werden.

In einer Ausführung ist das Halteelement verformbar ausgebildet. Auf diese Weise wird das Halteelement beim Einführen in den Grundkörper verformt, wodurch eine Haltekraft ausgeübt wird. Die Verformung kann dabei elastisch und/oder plastisch erfolgen.

Bevorzugt besteht dabei zumindest das Halteelement aus einem Kunststoff.

In einer Ausführung weist der Sicherungsstift als Auszugssicherung, insbesondere das Halteelement, ein Rastmittel und der Grundkörper ein Gegenrastmittel auf, wobei in der eingesetzten Position des Sicherungsstifts das Rastmittel mit dem Gegenrastmittel in Eingriff steht, um ein selbsttätiges Herausfallen des Sicherungsstiftes zu verhindern. Auf diese Weise ist der Sicherungsstift durch das Rastmittel sicher in der Sicherungsöffnung fixiert. Dabei kann das Rastmittel und/oder das Gegenrastmittel so ausgebildet sein, dass das Halteelement lösbar ist und somit der Sicherungsstift entnehmbar ist, ohne dass das Halteelement beschädigt wird. Auf diese Weise kann ein Sicherungsstift mehrfach eingesetzt und wieder gelöst werden.

In einer Ausführung liegt das Halteelement in eingesetzter Position des Sicherungsstiftes außerhalb der
Sicherungsöffnung.

In einer Ausführung greift das Halteelement von außen an dem Grundkörper an.

In einer Ausführung liegen das Rastmittel und das Gegenrastmittel außerhalb der Sicherungsöffnung.

Jedes dieser Merkmale bewirkt allein oder in Kombination, dass eine Verrastung von außen leicht zugänglich ist und einfach lösbar ist.

Zudem ist die Anordnung des Halteelements vereinfacht und somit kostengünstiger umsetzbar. Darüber hinaus ist dadurch auch die Herstellung vereinfacht, da etwa Rastmittel innerhalb der Sicherungsöffnung schwerer herstellbar sind.

Die Auszugsicherung kann auf vielfache Art realisiert sein. Bevorzugt wird ein Rastmittel und ein Gegenrastmittel verwendet. Auch diese Rastmittel können auf vielfältige Art ausgebildet sein.

In einer Ausführung ist das Rastmittel durch eine Federzunge gebildet, insbesondere wobei die Federzunge rechtwinklig zum Einsteckelement, vorzugsweise am Sicherungselement, angeordnet ist. Diese Federzunge rastet in der eingesetzten Position an einem Gegenrastmittel ein. Auf diese Weise kann der Sicherungsstift beispielsweise einstückig ausgebildet sein, wodurch eine einfache und kostengünstige Herstellung ermöglicht ist.

Die Federzunge wird in der Regel beim Einführen elastisch verformt. In der eingesetzten Position kann die Federzunge entweder wieder ganz entspannt sein, also in ihre Ausgangsposition zurückkehren, oder weiterhin gespannt sein.

In einer Ausführung, insbesondere wenn das Rastmittel als Federzunge ausgebildet ist, ist das Gegenrastmittel als Vorsprung oder Rastnase ausgebildet, wobei in der eingesetzten Position des Sicherungsstiftes die Federzunge den Vorsprung oder die Rastnase hintergreift. Auf diese Weise ist eine sichere Fixierung erzielt. Andererseits kann der Sicherungsstift auch wieder herausgezogen werden, wobei die Federzunge ebenfalls, nun in die andere Richtung, elastisch verformt wird.

### In einer Ausführung weist das freie Ende des

Sicherungsstiftes, insbesondere das Halteelement, eine an die äußere Kontur des Grundkörpers angepasste Form auf, so dass die Außenfläche des Sicherungsstifts in der eingesetzten Position im Wesentlichen bündig mit der Außenfläche des Grundkörpers abschließt. Auf diese Weise liegt die Außenfläche des Sicherungsstiftes im Wesentlichen an der Innenfläche einer Sanitärarmatur an oder bildet zumindest nur einen geringen Spalt aus. Dadurch wird der Sicherungsstift zusätzlich in seiner gesicherten Position gehalten, so dass eine doppelte Sicherung besteht.

In einer Ausführung greift der Sicherungsstift in eingesetzter Position in die Ablauföffnung an einem Stiftsabschnitt ein, der in Längserstreckung des Sicherungsstiftes zwischen zwei voneinander beabstandeten Stiftabschnitten liegt, an denen der Sicherungsstift in je eine der Zulauföffnungen eingreift.

Die Erfindung ist nachfolgend anhand von Ausführungsbeispielen mit Bezug auf die beiliegenden Zeichnungen näher erläutert.

Es zeigt:
- Fig. 1:: eine Schrägansicht eines Grundkörpers mit eingesetzten Schläuchen und einem geraden Sicherungsstift,
- Fig. 2:: einen Längsschnitt des Grundkörpers der Fig. 1,
- Fig. 3:: eine geschnittene Schrägdarstellung des Grundkörpers der Fig. 1 mit sichtbarem Sicherungsstift,
- Fig. 4:: eine Draufsicht der Schnittansicht der Fig. 2,
- Fig. 5:: eine Schrägansicht des Sicherungsstiftes der Fig. 2,
- Fig. 6:: eine Schrägansicht eines weiteren Grundkörpers mit einem kreisbogenförmigen Sicherungsstift,
- Fig. 7:: eine geschnittene Schrägdarstellung des Grundkörpers der Fig. 6 mit sichtbarem Sicherungsstift,
- Fig. 8:: eine Draufsicht der Schnittansicht der Fig. 7,
- Fig. 9:: eine Schrägansicht des Sicherungsstiftes der Fig. 7,

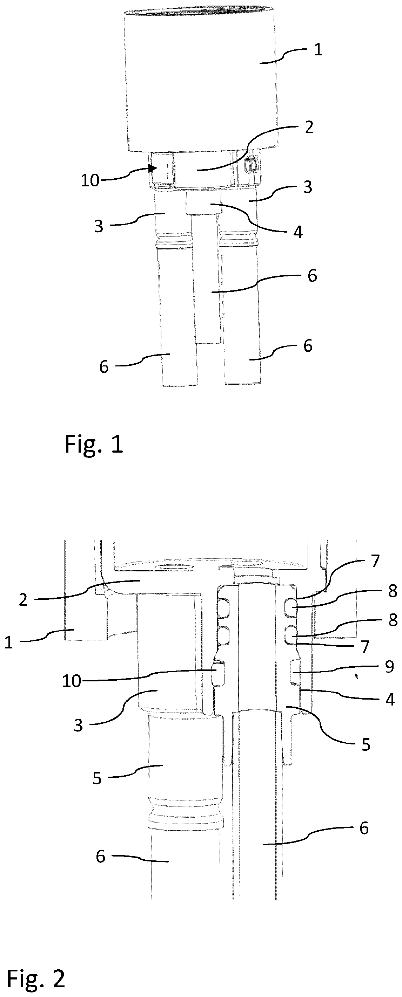

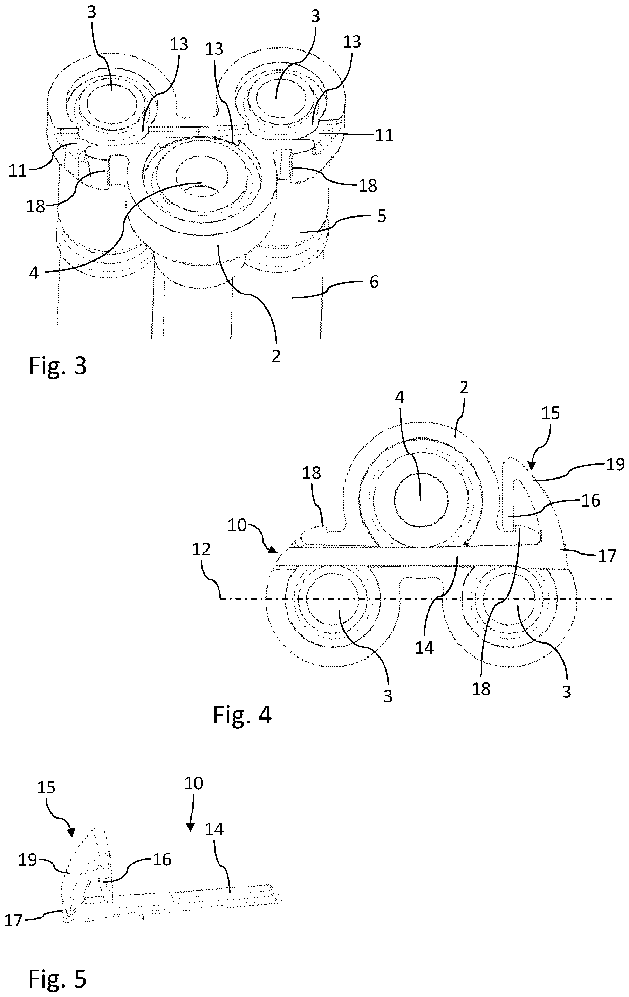

Die Figuren 1 bis 5 zeigen eine erste Ausführung einer Befestigungsvorrichtung zur Befestigung von Schläuchen an einer Kartusche einer Sanitärarmatur (1) . Der Grundkörper 2 ist in die Sanitärarmatur 1 eingesetzt, wobei hier nur eine Wandung der Sanitärarmatur 1 gezeigt ist.

Im Beispiel ist der Grundkörper integraler Bestandteil einer Kartusche, deren weiteren Merkmale hier nicht gezeigt sind.

Der Grundkörper besitzt zwei Zulauföffnungen 3 und eine Ablauföffnung 4. Wobei jede dieser Schlauchöffnungen zum Einführen eines Schlauchverbinders 5 eines Schlauches 6 ausgebildet ist.

Ein solcher Schlauchverbinder 5 besitzt an seinem Einführende beispielsweise zwei voneinander beabstandete umlaufende Dichtnuten 7, in die jeweils eine Radialdichtung 8 eingesetzt ist, beispielsweise ein O-Ring.

Eine weitere umlaufende Sicherungsnut 9 dient zur Sicherung des Schlauchs 6 in der Schlauchöffnung, durch einen Sicherungsstift 10, der in diese Sicherungsnut 9 eingreift, wie weiter unten ausführlich erläutert. In der Fig. 2 ist beispielhaft der Längsschnitt der Ablauföffnung 4 gezeigt. Die Zuläufe

Der Grundkörper 2 weist eine Sicherungsöffnung 11 auf, in die ein Sicherungsstift 10 eingesetzt ist. Die Sicherungsöffnung 11 bildet jeweils eine tangentiale Öffnung 13 in den Zulauföffnungen 3 und der Ablauföffnung 4. Diese Öffnung 13 liegt in axialer Richtung auf der Höhe der Sicherungsnut 9, so dass durch die Öffnung 13 in diese Sicherungsnut 9 eingreifbar ist.

In die Sicherungsöffnung 11 ist im Beispiel ein Sicherungsstift 10 eingesetzt. Der Sicherungsstift 10 besitzt ein Sicherungselement 14 und ein Halteelement 15. Das Sicherungselement 14 ist in dieser Ausführung gerade ausgebildet, wobei dementsprechend die Sicherungsöffnung 11 an das gerade Sicherungselement 14 angepasst ist und ebenfalls gerade ausgebildet ist.

Im Beispiel bilden die beiden Zulauföffnungen 3 eine Gerade 12. Die Sicherungsöffnung 11 ist im Wesentlichen parallel zu dieser Gerade 12 ausgerichtet. Die Sicherungsöffnung 11 ist so von der Gerade 12 beabstandet, dass sie zwischen der Gerade 12, also den Zulauföffnungen 3, und der Ablauföffnung 4 liegt. Auf diese Weise greift das Sicherungselement 14 des Sicherungsstifts 10 in die Sicherungsnuten 9 der Schlauchverbinder 5 aller Schläuche 6 ein. Somit sichert der Sicherungsstift 10 alle Schlauchverbinder 5. Der Vorteil besteht nun darin, dass ein einzelner Sicherungsstift 10 ausreicht. Und dieser Sicherungsstift 10 sehr einfach geformt ist.

Das Sicherungselement 14 besitzt im Beispiel einen viereckigen Querschnitt. Wobei der Querschnitt zudem über die Länge des Sicherungselements 14 vom Halteelement 15 aus abnimmt. Im Beispiel und generell vorzugsweise ist der Querschnitt nicht symmetrisch, also wie im Beispiel etwa leicht trapezförmig ausgebildet. Dadurch kann auf einfach Weise verhindert werden, dass der Sicherungsstift in der falschen Orientierung in Bezug auf seine Längsachse in die Sicherungsöffnung 11 eingeführt wird, so dass eine Verrastung der Rastzunge sichergestellt ist. Dadurch wird auch ein nachträgliches Lösen der Verrastung durch ein Verdrehen des Sicherungsstiftes innerhalb der Sicherungsöffnung 11 verhindert.

Der viereckige Querschnitt ist zudem vorteilhaft bei der Herstellung, etwa durch Spritzguss. Dabei kann etwa ein Schieber für die Sicherungsöffnung einen größeren Querschnitt aufweisen, was einfacher handhabbar ist.

Das Halteelement 15 ist an einem Ende des Sicherungselements 14 angeordnet. Im Beispiel weist das Halteelement 15 eine Federzunge 16 als Rastmittel auf, die senkrecht zu der Längserstreckung des Sicherungselements 14 und senkrecht zur Längserstreckung einer Zulauföffnung 4 ausgerichtet ist. Dabei ist das von dem Sicherungselement 14 beabstandete Ende 17 der Federzunge 16 über einen Bogen 19 mit dem Ende des Sicherungselements 14 verbunden. Die Federzunge 16 ist somit in der Einsetzrichtung, also längs zur Sicherungsöffnung 11 auslenkbar.

Die Rastzunge 16 hintergreift in der eingesetzten Position eine am Grundkörper 2 angeordnete Rastnase 18 als Gegenrastmittel. Auf diese Weise wird der Sicherungsstift 10 sicher in seiner eingesetzten Position gehalten. Die Rastzunge 16 und die Rastnase 18 bilden in diesem Beispiel die Auszugsicherung.

Das Halteelement 15, insbesondere die Federzunge 16, und auch die Rastnase 18 liegen vollständig außerhalb der Sicherungsöffnung 11. Dadurch ist eine spätere Entnahme des Sicherungsstiftes 10 vereinfacht. Zudem ist der Sicherungsstift 10 einfach aufgebaut und kostengünstig herstellbar.

In der gezeigten Ausführung ist die Sicherungsöffnung durchgehend oder beidseitig offen ausgebildet. Der Grundkörper 2 weist ebenfalls an beiden Seiten der Sicherungsöffnung 11 Rastnasen 18 als Gegenrastmittel auf. Die Sicherungsöffnung 11 ist demnach in ihrer Längsrichtung symmetrisch ausgebildet. Daher kann der Sicherungsstift 10 beidseitig in die Sicherungsöffnung 11 eingesetzt werden.

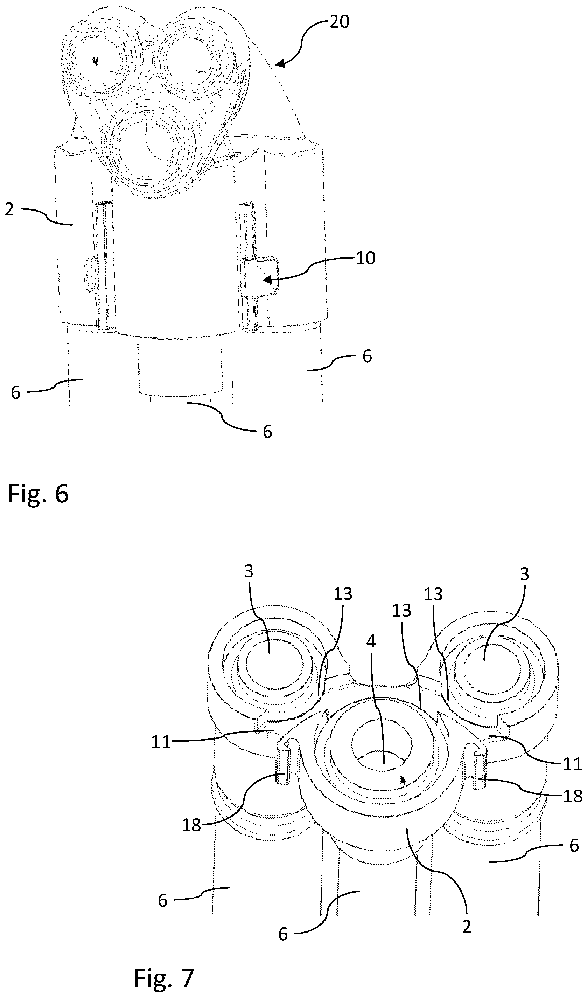

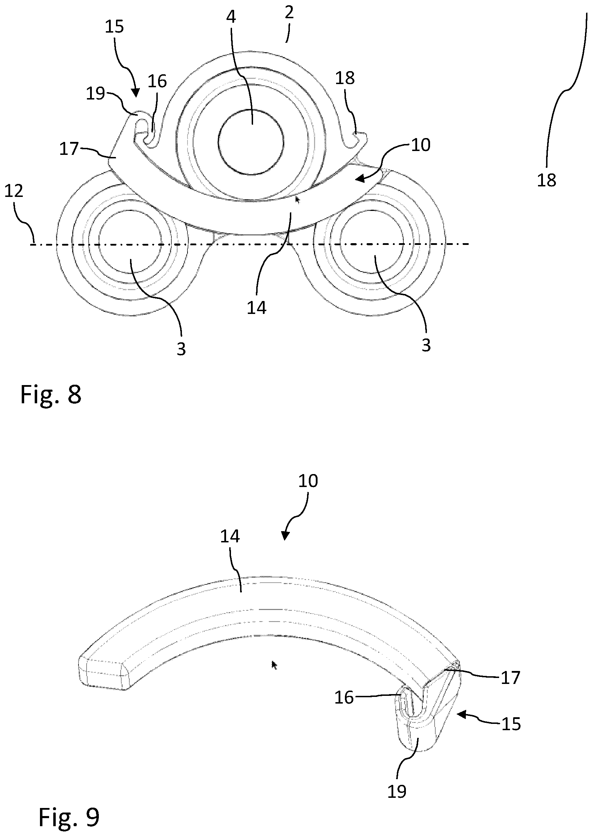

Die Figuren 6 bis 9 zeigen eine zweite Ausführung einer Befestigungsvorrichtung zur Befestigung von Schläuchen an einer Kartusche einer Sanitärarmatur (1).

In dieser Ausführung ist der Grundkörper 2 Teil eines Kartuschenadapters 20, der mit einer Kartusche verbunden wird. Im Folgenden sind die zur ersten Ausführung der Fig. 1 bis 5 gleichen oder funktionsgleichen Merkmale mit den gleichen Bezugszeichen versehen und nicht noch einmal erläutert. Im Folgenden sind daher nur die Unterschiede zur ersten Ausführung genau beschrieben.

Der Sicherungsstift 10 ist in dieser Ausführung nicht gerade, sondern kreisbogenförmig ausgebildet. Dementsprechend ist auch die Sicherungsöffnung 11 im Grundkörper 2 kreisbogenförmig ausgebildet.

Die Sicherungsöffnung 11 bildet auch in dieser Ausführung tangentiale Öffnungen 13 zu den Zulauföffnungen 3 und der Ablauföffnung 4, so dass das Sicherungselement 14 des Sicherungsstiftes 10 in die Sicherungsnuten 9 der Schlauchverbinder 5 eingreifen kann.

Das Halteelement 15 ist ebenfalls an einem Ende des Sicherungsstiftes 10 angeordnet, wobei hier die Federzunge 16 unmittelbar durch einen etwa 180° Bogen 19 gebildet ist.

### Bezugszeichenliste

- 1: Armatur
- 2: Grundkörper
- 3: Zulauföffnungen
- 4: Ablauföffnung
- 5: Schlauchverbinder
- 6: Schlauch
- 7: Dichtnut
- 8: Radialdichtung
- 9: Sicherungsnut
- 10: Sicherungsstift
- 11: Sicherungsöffnung
- 12: Gerade
- 13: Tangentiale Öffnung
- 14: Sicherungselement
- 15: Halteelement
- 16: Federzunge
- 17: Ende des Sicherungselements
- 18: Rastnase
- 19: Bogen
- 20: Kartuschenadapter

## Patentansprüche

1. Befestigungsvorrichtung zur Befestigung von Schläuchen (6) an einer Kartusche (1) einer Sanitärarmatur, wobei ein Grundkörper (2) zwei Zulauföffnungen (3) und eine Ablauföffnung (4) jeweils zum Einführen eines Schlauchverbinders (5) aufweist, **dadurch gekennzeichnet, dass** ein Sicherungsstift (10) von außen in den Grundkörper (2) einsetzbar ist, wobei der Sicherungsstift (10) in die Ablauföffnung (4) und in die beiden Zulauföffnungen (3) eingreift, um dort eine Sicherung eingesetzter Schläuche (6) zu ermöglichen und dass die Befestigungsvorrichtung eine Auszugssicherung umfasst, die den Sicherungsstift (10) in dem Grundkörper (2) hält.

2. Befestigungsvorrichtung nach dem vorangehenden Anspruch,
**dadurch gekennzeichnet, dass** der Grundkörper (2) eine Sicherungsöffnung (11) aufweist, insbesondere wobei der Sicherungsstift (10) von außen radial und/oder geradlinig in die Sicherungsöffnung (11) einsetzbar ist, und/oder insbesondere wobei die Sicherungsöffnung (11) im Wesentlichen gerade oder kreisbogenförmig ausgebildet ist und/oder insbesondere wobei die Sicherungsöffnung (11) den Sicherungsstift (10) in wenigstens zwei Orientierungen in Bezug auf dessen Längsachse aufnehmen kann.

3. Befestigungsvorrichtung nach einem der vorangehenden Ansprüche, **dadurch gekennzeichnet, dass** die Sicherungsöffnung (11) in einer radialen Richtung zwischen den Zulauföffnungen (3) und der Ablauföffnung (4) angeordnet ist und/oder dass die Sicherungsöffnung (11) jeweils eine tangentiale Öffnung (13) in den Zulauföffnungen (3) und der Ablauföffnung (4) definiert.

4. Befestigungsvorrichtung nach einem der vorangehenden Ansprüche, **dadurch gekennzeichnet, dass** die Sicherungsöffnung (11) durchgehend oder beidseitig offen ausgebildet ist, insbesondere so dass der Sicherungsstift (10 beidseitig einsetzbar ist.

5. Befestigungsvorrichtung nach einem der vorangehenden Ansprüche, **dadurch gekennzeichnet, dass** der Sicherungsstift (10) einen unrunden, insbesondere viereckigen, Querschnitt besitzt und/oder dass der Querschnitt des Sicherungsstiftes (10) entlang seiner Längserstreckung variiert.

6. Befestigungsvorrichtung nach einem der vorangehenden Ansprüche, **dadurch gekennzeichnet, dass** die Auszugsicherung einen Formschluss und/oder Kraftschluss zwischen dem Grundkörper und dem Sicherungsstift umfasst.

7. Befestigungsvorrichtung nach einem der vorangehenden Ansprüche, **dadurch gekennzeichnet, dass** der Sicherungsstift (10) ein Sicherungselement (14) besitzt, zum Einsetzen in die Sicherungsöffnung (11) ausgebildet ist, insbesondere wobei das Sicherungselement (14) im Wesentlichen gerade oder kreisbogenförmig ausgebildet ist und/oder insbesondere wobei das Sicherungselement (14) die Form der Sicherungsöffnung (11) aufweist.

8. Befestigungsvorrichtung nach einem der vorangehenden Ansprüche, **dadurch gekennzeichnet, dass** der Sicherungsstift (10) ein Halteelement (15) aufweist, insbesondere zur Auszugsicherung.

9. Befestigungsvorrichtung Anspruch 8, **dadurch gekennzeichnet, dass** als Auszugssicherung das Halteelement (15) einen gegenüber der Sicherungsöffnung (11) vergrößerten Querschnitt besitzt, insbesondere wobei das Halteelement (15) verformbar ausgebildet ist.

10. Befestigungsvorrichtung nach einem der vorangehenden Ansprüche, **dadurch gekennzeichnet, dass** als Auszugssicherung der Sicherungsstift (10), insbesondere das Halteelement (15), ein Rastmittel und der Grundkörper (2) ein Gegenrastmittel aufweist, wobei in der eingesetzten Position des Sicherungsstifts (10) das Rastmittel mit dem Gegenrastmittel in Eingriff steht, um ein selbsttätiges Herausfallen des Sicherungsstiftes (10) zu verhindern.

11. Befestigungsvorrichtung nach Anspruch 10, **dadurch gekennzeichnet, dass** das Halteelement (15) in eingesetzter Position des Sicherungsstiftes (10) außerhalb der Sicherungsöffnung (11) liegt und/oder von außen an dem Grundkörper (2) angreift und/oder dass das Rastmittel und das Gegenrastmittel außerhalb der Sicherungsöffnung (11) liegen.

12. Befestigungsvorrichtung nach einem der Ansprüche 10 oder 11, **dadurch gekennzeichnet, dass** das Rastmittel durch eine Federzunge (16) gebildet ist, insbesondere wobei die Federzunge (16) rechtwinklig zum Sicherungsstift (10), vorzugsweise am Sicherungselement (14), angeordnet ist.

13. Befestigungsvorrichtung nach einem der Ansprüche 10 bis 12, **dadurch gekennzeichnet, dass** das Gegenrastmittel als Rastnase (18) ausgebildet ist, wobei in der eingesetzten Position des Sicherungsstiftes (10) die Federzunge (16) die Rastnase (18) hintergreift.

14. Befestigungsvorrichtung nach einem der vorangehenden Ansprüche, **dadurch gekennzeichnet, dass** das freie Ende (17) des Sicherungsstiftes (10), insbesondere das Halteelement (15), eine an die äußere Kontur des Grundkörpers (2) angepasste Form aufweist, so dass die Außenfläche des Sicherungsstifts (10) in der eingesetzten Position im Wesentlichen bündig mit der Außenfläche des Grundkörpers (2) abschließt.

15. Befestigungsvorrichtung nach einem der vorangehenden Ansprüche, **dadurch gekennzeichnet, dass** der Sicherungsstift (10) in eingesetzter Position in die Ablauföffnung (4) an einem Stiftsabschnitt eingreift, der in Längserstreckung des Sicherungsstiftes (10) zwischen zwei voneinander beabstandeten Stiftabschnitten liegt, an denen der Sicherungsstift (10) in je eine der Zulauföffnungen (3) eingreift.
